Europäisches Patentamt

European Patent Office

Office européen des brevets

(19)

(11) Publication number: **0 109 068**
A2

# (12) EUROPEAN PATENT APPLICATION

(21) Application number: 83111287.5

(22) Date of filing: 11.11.83

(51) Int. Cl.³: **G 05 B 19/42**

(30) Priority: 11.11.82 JP 196823/82

(43) Date of publication of application: 23.05.84
Bulletin 84/21

(84) Designated Contracting States: **DE FR GB**

(71) Applicant: HITACHI, LTD., 6, Kanda Surugadai 4-chome
Chiyoda-ku, Tokyo 100 (JP)

(72) Inventor: Michinaga, Kohno, 4-30-15, Kugahara, Ohta-ku
Tokyo (JP)

(74) Representative: Patentanwälte Beetz sen. - Beetz jun.
Timpe - Siegfried - Schmitt-Fumian,
Steinsdorfstrasse 10, D-8000 München 22 (DE)

(54) Method and apparatus for controlling industrial robot.

(57) A method and an apparatus for controlling an industrial
robot is disclosed which has a step or detector (9) for directly
sensing the position of a finger portion (8) of the robot, a data-
processing-instruction generator (32) for determining a con-
trol quantity of the finger portion (8) and transmitting instruc-
tions corresponding to the control quantity, a step or sensor
(39) for indirectly detecting the position and posture of the
finger portion (8) by sensing the numbers of revolutions of the
driving sources (37) and switching means (32') for selectively
changing control modes of the robot between one control
mode using the detector (9) and to another control mode us-
ing the sensor (39).

ACTORUM AG

# METHOD AND APPARATUS FOR CONTROLLING
## INDUSTRIAL ROBOT

Technical Field

This invention relates to a method and apparatus for controlling an industrial robot. More particularly, the present invention relates to a method and apparatus for controlling the position and posture of a finger portion of an industrial robot with a high degree of precision.

Background Art

In a conventional industrial robot, the position information necessary for controlling the posture of the robot and the position and posture of the finger portion of the robot is obtained only by a position detector fitted on a driving source for driving each joint of the robot. Therefore, the robot cannot be controlled with a high degree of precision because the position information doesn't include errors resulting from back-lash of reduction gears and deflection of the arm member of the robot.

It is apparent, therefore, that the prior art technique of indirectly sensing position by monitoring operation of a driving source does not include means for detecting an error in detected position of a robot's finger portion resulting from back-lash of reduction gears and deflection of the arm member of the robot. This position error consequentially results in erroneous operation of the robot.

## Statement of Invention

It is an object of the present invention to provide an improved apparatus for and a method of controlling an industrial robot to operate a finger portion of the robot with a high degree of precision.

It is another object of the present invention to provide an apparatus for and a method of rapidly controlling an industrial robot.

It is still another object of the present invention to provide an apparatus for and a method of reliably controlling an industrial robot.

The characterizing feature of this invention resides in a method or an apparatus including a step or a detector for directly detecting at least one of the position and posture of the finger portion of the robot and a subsequent step and a data processing-instruction generator for determining the control quantity for the finger portion of the robot from the detection value applied thereto by the detector and then sending instructions on the basis of the control quantity thus determined to the driving source of the robot. This construction assures that the finger portion of the robot operates with a high degree of precision.

Another characterizing feature of this invention resides in a method or apparatus including a change-over step or means for selectively changing control modes of the robot between a control mode within an operation range requiring a high degree of precision and a control mode within an operation range permitting a lower degree of precision. Within the operation range requiring a high degree of precision, the driving source of the robot is controlled in accordance with instructions applied thereto from a data processing-instruction generator on the basis of the detection value obtained from a detector for directly sensing at least one of the position or the posture of the finger portion of the robot. Within the operation range not requiring such high precision, the driving source of the robot is controlled using the posture signal of the robot and the position and posture signal of the finger portion of the robot that are obtained from a detector responsively fitted to sense operation of the driving source of the robot. This construction permits rapid control of the robot.

Brief Description of the Drawings

Figure 1 is a side view showing a conventional technique of controlling an industrial robot to illustrate a factor responsible for causing errors in the positioning of the finger portion of the robot.

Figure 2 is a partially enlarged sectional view of a driving portion of the robot.

Figure 3 is a partially cut-away sectional perspective view of one embodiment of the present invention.

Figure 4 is an enlarged perspective view showing a position detector on the plane of the finger portion of the robot.

Figure 5 is an enlarged side view showing the position detector of the finger portion of the robot in the vertical direction.

Figure 6 is a block diagram showing the position detector of the finger portion of the robot, a data processing-instruction generator, a driving source for the robot, and a speed detector and a position detector connected to the driving source.

Detailed Description of the Invention

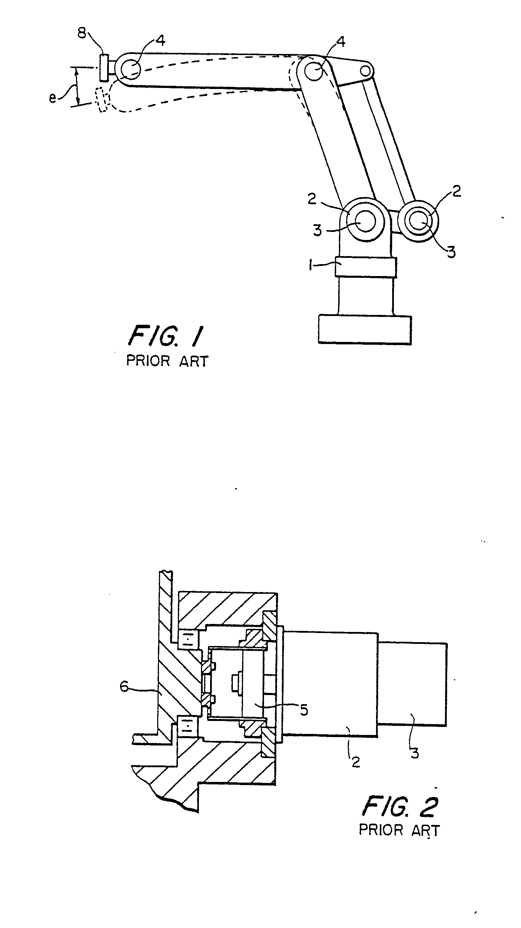

As shown in Figure 1 and Figure 2, a position detector 3 such as an encoder or a potentionmeter is fitted on a driving source 2 for driving each joint 4 of the robot 1, such as a direct current servo motor, so that the position detector 3 generates a pulse proportional to the quantity of revolution of the driving source 2. The position of the finger portion 8 of the robot 1 is geometrically determined from the quantity of revolution of the driving source 2 obtained by the position detector 3, the reduction ratio of a reduction gear 5 and the dimension of the arm position of the robot 1.

It is apparent, therefore, that the prior art technique of indirectly sensing position by monitoring operation of a driving source does not include means for detecting an error in the sensed position of a robot's finger portion 8 resulting from the back-lash of reduction gears 5 and deflection of the arm member of the robot 1. This position error 3 consequentially results in erroneous operation of the robot as represented by broken line in Figure 1.

Hereinafter, a preferred embodiment of the present invention will be described with reference to the accompanying drawings.

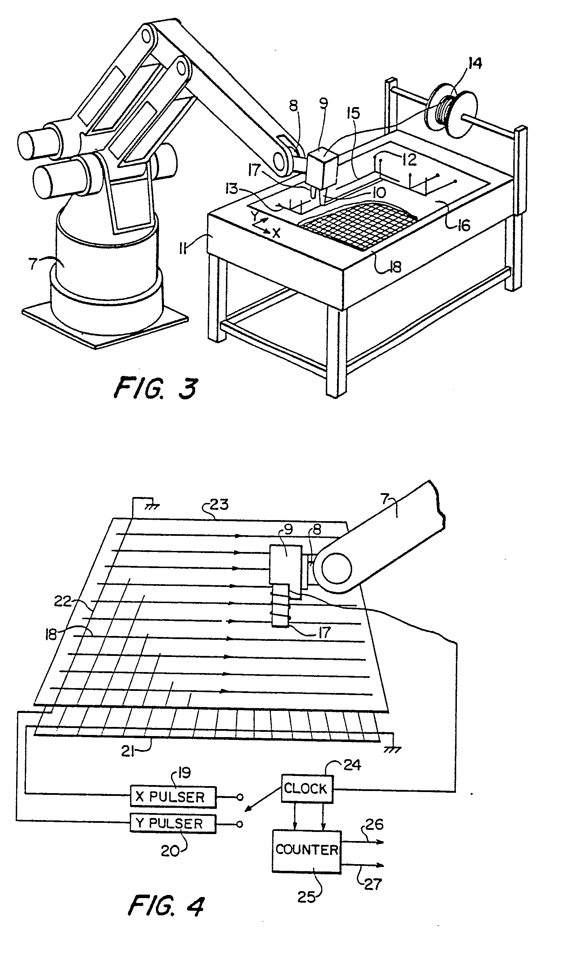

Figures 3 through 6 illustrate an example of the industrial robot to which the present invention is applied and an embodiment of the apparatus for practising the method of the present invention.

As shown in Figure 3, an industrial robot 7 of this embodiment is constructed so as to perform the following operation. First, the robot pulls out a wire 15 from a reel 14 on a wiring bed 11 and discharges the wire from a nozzle 10 which is defined in a tool 9 fitted to the finger portion 8 of the robot 7. The robot moves while hanging the wire around a guide pin 12 and a clamp 13 that are disposed at predetermined positions of a wiring plate 16 on the wiring bed 11, and thus forms a pattern on the wiring plate 16.

As will be hereinafter described in greater detail, the industrial robot control apparatus includes a position detector for sensing the position of the finger portion 8 of the robot 7, a data processing-instruction generator, a change-over circuit for altering the control modes of the robot 7, a source for driving the robot 7, and a speed detector and a position detector that are fitted to the driving source. The position detector for the finger portion 8 of the robot 7 includes a position detector for detecting the position on a plane and a ultrasonic distance sensor as a position detector for detecting the position in the vertical direction.

As shown in Figures 3 and 4, the position detector for sensing the position of the finger portion 8 within a plane includes a search coil 17, wire meshes 18 stretched in both longitudinal and transverse directions (i.e., X and Y directions) with predetermined pitches between them, X and Y pulsers (i.e., electronic pulse generators) 19, 20, X and Y write wires 21, 22, an electrically conducting loop 23 for creating a magnetic field bias and a clock 24 for driving X and Y pulse generators 19, 20 during alternate intervals. The wire mesh 18 forms a grid which is disposed below the wiring plate 16. The search coil 17 is disposed in tool 9 which is fitted on the finger portion 8 of the robot 7. The X and Y pulsers 19 and 20, respectively, alternately generate pulses during each predetermined interval of time set by the clock 24 and are scanned in the X and Y directions across wire mesh 18 by means of the X and Y write wires 21 and 22. Accordingly, distortion develops in the magnetic field generated by the magnetic bias loop 23 and this distortion travels in the X and Y directions during the predetermined interval. The search coil 17 detects this distortion of the magnetic field. The time delay in the detection timing from the start of scanning is measured by a counter 25 so as to read an X coordinate value 26 and a Y coordinate value 27 of the location of the search coil 17. Thus, the position of the finger portion 8 of the robot 7 on the plane can be detected.

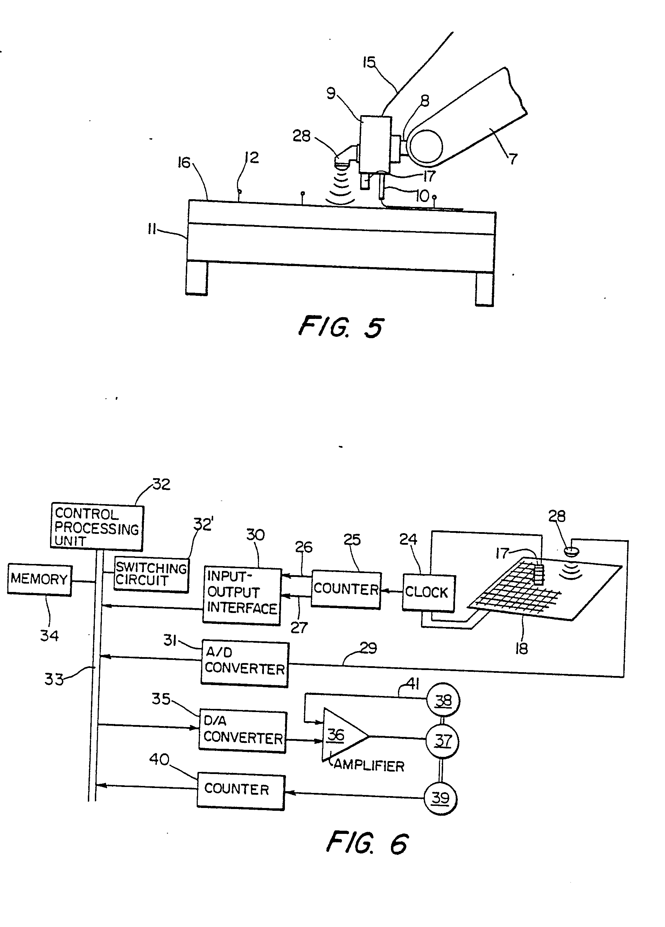

Referring now to Figure 5, the ultrasonic distance sensor 28 which is a position detector for detecting the position of the robot finger portion in the vertical direction, is fitted on the tool 9. The sensor 28 serves as a distance detector by emitting an ultrasonic wave on the wiring plate 16; the ultrasonic wave is reflected from the surface of the wiring plate 16 and returns to sensor 28. The time delay occurring between emission and return of the ultrasonic wave is measured so as to read the Z coordinate value 29 of the finger portion 8 of the robot 7 and to detect its position in the vertical direction.

Referring now to Figure 6, the data processing-instruction generator includes a central processing unit 32 and a bus line 33 connected to the processing unit. An input-output interface 30 is connected to the counter 25 of the position detector for detecting the position of the finger portion 8 of the robot 7 on the plane, an analog to digital convertor 31 which is connected to the ultrasonic distance sensor 28 for detecting the position of the finger portion 8 in the vertical direction, a memory 34 for storing various data, a digital to analog converter 35 for sending instruction to the driving source 37 of the robot 7, and a counter 40 connected to the position detector 39 that is fitted to the driving source 37, are connected to this bus line 33. A speed detector 38 is connected to driving source 37.

The X and Y coordinates values 26, 27 produced from the counter 25 of the position detector for the finger portion 8 of the robot 7 on the plane are transmitted to the central processing unit 32 via the input-output interface 30 and the Z coordinates value 29 detected by the ultrasonic distance sensor 28 is also transmitted to the central processing unit 32 via the analog to digital convertor 31. The central processing unit 32 determines the control quantity of the finger portion 8 of the robot 7 on the basis of these X, Y and Z coordinates values 26, 27, 29 and sends instructions to the digital to analog convertor 35 on the basis of the control quantity thus determines. The digital to analog convertor 35 converts the instruction value received from central processing unit 32 from its digital value into an analog value. The value, as converted, is then fed to the driving source 37 of robot 7 through amplifier 36 so as to control driving source 37.

As shown in Figure 6, speed detector 38 and position detector 39 are connected to driving source 37 of robot 7. A signal 41 indicating the speed of driving source 37 detected by speed detector 38 is fed back to amplifier 36, and position detector 39 senses the number of revolutions of driving source 37 and applies the number as a signal 42 indicative of the position of finger portion 8 of the robot 7 to counter 40 and from thence, to central processing unit 32.

The change-over means (i.e., switching circuit 32') for switching the control modes of the robot 7, selectively changes the control of the robot 7 to a mode within an operation range permitting a lower degree of precision. In this embodiment, the control mode within the operation range requiring the high precision represents a control mode within such an operation range in which the successive movement of robot 7 forms a pattern on the wiring plate 16. In this control mode, robot 7 is controlled by the instructions sent to driving source 37 of robot 7 on the basis of the control quantity determined from the X, Y and Z coordinate values 26, 27, 29 as the detection values sensed by the position detector for the finger portion 8 of robot 7. The control mode within the operation range permitting a lower degree of precision in this embodiment represents a control mode in such an operation range within which robot 7 is spaced apart from the wiring plate 16. In this control mode, robot 7 is controlled using the position signal 42 obtained from the number of revolutions of driving source 37.

Next, the operation of the control apparatus for the industrial robot of this embodiment will be explained together with the control method.

In the control mode within the operation range requiring a high degree precision, that is, when the path of the pattern is to be formed by the tool 9 fitted to the finger portion 8 of the robot 7, the position of the finger portion 8 of the robot 7 on the X-Y plane is detected by the position detector for sensing the position on the X-Y plane, which detector includes the search coil 17, the wire meshes 18, the X and Y pulsers 19, 20, the X and Y write 21, 22, the magnetic bias 23, the clock 24 and the counter 25. The X and Y coordinates values 26, 27 are applied as sensed values to central processing unit 32 through input-output interface 30. The position of finger portion 8 of robot 7 in the vertical direction is also detected by ultrasonic distance sensor 28 which acts as a position detector for sensing the position in the vertical direction, and the Z coordinate value 29 as the detection value is also applied as the sensed vertical position value to central processing unit 32 through analog to digital convertor 31.

Next, the central processing unit 32 of the data processing-instruction generator determines the control quantity of the finger portion 8 of the robot 7 from the X, Y and Z coordinate values 26, 27, 29 and applies instructions to driving source 37 of robot 7 on the basis of the control value thus determined, through the digital to analog convertor 35 and through the amplifier 36 thereby controlling the driving source 37 of robot 7 by the instruction based upon the X, Y and Z coordinate values 26, 27, 29. This control mode does not use the detection signal 42 picked up from position detector 39 connected to driving source 37 through counter 40. On the wiring plate 16, which requires a high degree of precision, the position of the finger portion 8 of the robot 7 is directly detected and the instruction on the basis of the detection value is sent to the driving source 37 of robot 7 so as to control the robot. Accordingly, finger portion 8 of robot 7 can be operated with a high degree of precision.

When the robot operation is changed to an operation range permitting a lower degree of precision, that is, when finger portion 8 of robot 7 is operated at a position spaced apart from the wiring plate 16, the control change-over means changes over the control mode from the control mode within the operation range requiring a high degree precision to the control mode within the operation range permitting a lower degree of precision.

In this control mode within the operation range permitting a lower degree of precision, driving source 37 of robot 7 is controlled by using position signal 42 obtained from position detector 39 connected to driving source 37 and the X, Y and Z coordinate values 26, 27, 29 are not used as the sensed detection values of the position detector for finger portion 8 of robot 7. This arrangement can omit the steps of accurately detecting the position of the finger portion 8 of robot 7 so that robot 7 can be rapidly operated within the operation range permitting a lower degree of precision.

To shift again from the operation range permitting a lower degree of precision to the operation range requiring a high degree of precision, the control mode is switched by the control mode change-over means. As a result, the robot 7 can be controlled in accordance with the necessary accuracy within the operation range requiring a high degree of precision and can be rapidly controlled within the operation range permitting a lower degree of precision in an efficient manner.

In the embodiment set forth in the foregoing description, a plurality of ultrasonic distance sensors may be fitted to the tool 9 so as to detect the inclination (posture) of the finger portion 8 of robot 7. According to this arrangement, robot 7 can be operated with a higher level of accuracy within the operation range requiring higher precision. Depending upon the intended application, only the posture of finger portion 8 of robot 7 may be sensed so as to control robot 7.

The robot may also, if so desired, be controlled in the first control mode by using the posture signal of robot 7 and the position and posture signals of the finger portion 8 of the robot 7 for operations which normally permit a lower degree of precision.

Besides use with the robot for forming the pattern on the wiring plate 16 illustrated in the foregoing embodiment, the present invention can naturally be applied to robots of various other types such as a robot for assembling components, a robot for welding, and so forth.

The present invention has the construction and action as described in the foregoing. According to the specified invention of the present application, at least one of the position and posture of the finger portion of the robot is directly sensed and the quantity of control of the finger portion is determined from the detection value so that the instruction on the basis of the control quantity thus determined is applied to the driving source of the robot to control the robot. Hence, the finger portion of the robot can be operated with a high level of accuracy.

According to the present invention, the control of the robot can be switched between the control mode within the operation range providing a high degree of precision and the control mode within the operation range permitting a lower degree of precision so that within the former range, at least one of the position and posture of the finger portion of the robot is directly sensed, the control quantity of the finger portion is determined from the detection value and the instruction is sent to the driving source of the robot on the basis of the control quantity thus determined so as to control the robot. And, within the latter range, the posture signal of the robot and the position and posture signal of the finger portion of the robot that can be obtained from the number of revolutions of the driving source of the robot are used so as to control the driving source. Hence, the finger portion of the robot can be operated with high precision within the operation range requiring a high degree of precision while the finger portion of the robot can be rapidly operated within the operation range permitting a lower degree of precision.

According to the present invention, the apparatus includes a detector for directly sensing at least one of the position and posture of the finger portion of the robot and the data processing-instruction generator for determining the control quantity of the finger portion of the robot from the detection value applied thereto from the detector and for sending the instruction to the driving source of the robot from the control quantity thus determined. Hence, this apparatus can reliably practice the specified invention described above.

Furthermore, according to the present invention, the robot controlling apparatus is constructed so that control of the robot can be selectively switched between the control mode within the operation range requiring a high degree of precision and the control mode permitting a lower degree of precision; within the operation range requiring a high degree of precision, the driving source of the robot is controlled by the instruction applied from the data processing-instruction generator on the basis of the detection value applied to the generator from the detector for directly sensing at least one of the position and posture of th finger portion of the robot; and within the operation range permitting a lower degree of precision, the driving source of the robot is controlled by use of the posture signal of the robot as well as the position and posture signal of the finger portion of the robot that are obtained by the detector fitted to the driving source of the robot.

WHAT IS CLAIMED IS:

1. An apparatus for controlling an industrial robot (7) comprising:

a sensing network (9, 17-25) including a position sensor (9) mounted on a finger portion (8) of a robot (7) to directly detect and generate signals indicative of the position of the finger portion (8) relative to a source of reference;

a memory (34) for storing the signals from said positioning sensor (9); and

means (32) for determining a control quantity for the finger portion (8) from the signals and for sending instructions corresponding to the control quantity to driving sources (37) of the robot (7), thereby enabling the finger portion (8) of the robot (7) to be operated by direct referral to said source of reference.

2. The apparatus of claim 1 wherein said sensing network further comprises an induction unit (23) installed for use in one operational mode, said unit (23) being inductively coupled to said position sensor (9) and having predetermined pitches in two dimensions.

3. The apparatus of claim 1 wherein said sensing network further comprises:

a position detector (39) fitted to each of the driving sources (37) for detecting the position and posture of the finger portion (8) of the robot (7) by sensing the numbers of revolutions of the driving sources (37); and

change-over means (32') for selectively switching between a plurality of control modes, wherein a first one of the control modes controls the finger portion (8) by using said position sensor (9) and a second one of the control modes controls the finger portion (8) by using said position detector (39), whereby the finger portion (8) is controlled by direct referral to said source of reference in an operational range in the first one of the control modes and is controlled by direct referral to said driving sources (37) out of the operational range in the second one of the control modes.

4. The apparatus of claim 3, wherein said sensing network further comprises:
    an induction unit installed for use in the operation range of the robot (7), said unit being inductively coupled to said position sensor (9) and having predetermined pitches in two dimensions.

5. The apparatus of claim 4, wherein said position sensor has a search coil (17) and said induction unit has a wire mesh (18) stretched in two directions with predetermined pitches, said induction unit being inductively coupled to said search coil (17).

6. The apparatus of claim 5, wherein said position sensor (4) has at least one ultrasonic distance sensor (28) disposed to detect the vertical position of the finger portion (8).

7. An industrial robot, comprising:
    a base;
    a finger portion (8) movably supported by said base;
    driving sources (37) mounted on said base to move said finger portion (8);

a positioning sensor (9) mounted on said finger portion (8) to directly detect the position of said finger portion (8) relative to a reference source;

a memory (34) for storing signals from said position sensor (9, 39) describing the position of said finger portion (8); and

means (32) for determining from said signals a control quantity for controlling said finger portion (8) and sending to said driving sources (2, 37) instructions corresponding to the control quantity, thereby enabling the finger portion (8) of the robot (7) to be operated by direct referral to said reference source.

8. The industrial robot of claim 7, wherein said position sensor (9) detects the position of said finger portion (8) in cooperation with an induction unit installed as a source of reference for use in one operational mode.

9. The industrial robot of claim 8, wherein said position sensor (9) has a search coil (17) to detect the position of said finger portion (8) in combination with a wire mesh (18) stretched in two directions with predetermined pitches, said wire mesh (18) providing said source of reference.

10. The industrial robot of claim 9, wherein said position sensor (9) has at least one ultrasonic distance sensor (28) arranged to detect the vertical position and, in cooperation with another position sensor (17), to detect the posture of said finger portion (8).

- 4 -

0109068

11. The industrial robot of claim 7, further comprising:
a position detector (39) connected to each of said driving sources (37) for detecting the position and posture of said finger portion (8) by sensing the numbers of revolutions of said driving sources (37); and
change-over means (32') for selectively switching between control modes, one of the control modes serving to control said finger portion (8) by using said positioning sensor (9) and the other of the control modes serving to control said finger portion (8) by using said position detector (39), whereby said finger portion (8) is controlled by direct referral to said reference source in an operation range in the first one of the control modes and is controlled in direct reference to said driving sources (37) out of the operation range in the second of the control modes.

12. The industrial robot of claim 11, wherein said position sensor (9) detects the position of said finger portion (8) in combination with an induction unit installed in the operational range of the robot (7).

13. The industrial robot of claim 12, wherein said position sensor (9) includes a search coil (17) to detect the position of said finger portion (8).

14. The industrial robot of claim 13, wherein said position sensor (9) has at least one ultrasonic distance sensor (28) to detect the vertical position of said finger portion (8).

- 5 -    0109068

15. A method of controlling an industrial robot, comprising the steps of:

detecting directly a position of a finger portion (8) of the robot (7) by a position sensor (9) mounted on a finger portion (8) of said robot (7);

storing signals on the position of the finger portion (8) from the position sensor (9) in a memory (34);

calculating a control quantity of the finger portion (8) from the signals; and

sending instructions responding to the control quantity to driving sources (2) of the robot (7).

16. The method of claim 15, wherein, in said detecting step, the position of the finger portion (8) is detected by the positioning sensor (9) in combination with an induction unit installed in an operation range of the robot (7).

17. The method of claim 15, further comprising the steps of:

sensing a portion and posture of the finger portion (8) by a position detector (39) connected to each of the driving sources (37); and

changing selectively between control modes, one of the control modes controlling the finger portion (8) by using the position sensor (9) and the other of the control modes controlling the finger portion (8) by using the position detector (39), whereby the finger portion (8) is controlled with a high degree of precision in an operation range by the one of the control modes and is controlled with low precision but high speed outside of the operation range by the other of the control modes.

18. The method of claim 17, wherein in said detecting step, the position of the finger portion (8) is detected by the position sensor (9) in combination with an induction unit (18) installed in an operation range of the robot (7).

0109068

FIG. 1

PRIOR ART

FIG. 2

PRIOR ART

0109068

FIG. 3

FIG. 4

0109068

FIG. 5

FIG. 6